# EUROPEAN PATENT APPLICATION

(11) **EP 4 746 535 A1**
(43) Date of publication of application: **20.05.2026**
(21) Application number: 24850901.0
(22) Date of filing: 01.08.2024
(51) Int. Cl.: H04W 52/02

(54) **COMMUNICATION METHOD AND APPARATUS**

(30) Priority: 10.08.2023 CN 202311007039
(71) Applicant: Huawei Technologies Co., Ltd., Shenzhen, Guangdong 518129 (CN)
(72) Inventor: GAO, Fei, Shenzhen, Guangdong 518129 (CN); HUANG, Xiuxuan, Shenzhen, Guangdong 518129 (CN); HUA, Meng, Shenzhen, Guangdong 518129 (CN); DING, Mengying, Shenzhen, Guangdong 518129 (CN)
(74) Representative: Isarpatent
(86) International application number: PCT/CN2024/109188
(87) International publication number: WO 2025/031256

(57) **Abstract**

A communication method and apparatus relating to the field of mobile communication technologies are provided, to provide a secondary cell dormancy indication solution that is based on single DCI, so as to reduce power consumption of a terminal device. In the method, first indication information in the single DCI is used to indicate that an active BWP of a first secondary cell is a first dormant BWP, so as to indicate a secondary cell that enters a dormant state. In addition, N scheduled cells may be indicated by using second indication information in the single DCI, where the N scheduled cells do not include the first secondary cell. Therefore, the secondary cell that enters the dormant state may be indicated by using the single DCI, and the scheduled cells may be indicated by using the same single DCI. In addition, when the N scheduled cells include the first secondary cell, data transmission may be preferentially performed in the first secondary cell, that is, the first secondary cell does not enter the dormant state.

## Description

### CROSS-REFERENCE TO RELATED APPLICATIONS

This application claims priority to Chinese Patent Application No. 202311007039.1, filed with the China National Intellectual Property Administration on August 10, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In spectrum resources below 6 gigahertz (gigahertz, GHz) (sub-6 GHz), contiguous spectrum resources with a large bandwidth are highly scarce, in other words, a bandwidth of a single carrier is limited. Carrier aggregation (carrier aggregation, CA) is a key technology to resolve the problem of the limited bandwidth of the single carrier. During carrier aggregation, two or more component carriers (component carrier, CC) are aggregated to support a larger transmission bandwidth. In a CA scenario, there may be a plurality of cells that provide services for a terminal device, in other words, the terminal device has a plurality of serving cells. The plurality of serving cells of the terminal device may include one primary cell (primary cell, PCell) and one or more secondary cells (secondary cell, SCell). Single downlink control information (downlink control information, DCI) (single DCI) supports scheduling of data transmission across a plurality of cells.

Currently, in a single DCI scheduling scenario, how to implement secondary cell dormancy to reduce power consumption of the terminal device is a technical problem to be resolved.

### SUMMARY

This application provides a communication method and apparatus, to provide a secondary cell dormancy indication solution that is based on single DCI, so as to reduce power consumption of a terminal device.

According to a first aspect, a communication method is provided. The method may be implemented by a first communication apparatus. The first communication apparatus may be a terminal device or a component of the terminal device. The component in this application may include at least one of a chip, a chip system, a processor, a transceiver, a processing unit, or a transceiver unit. An example in which the method is performed by the first communication apparatus is used. The method may be implemented by using the following steps: The first communication apparatus receives first DCI. A format of the first DCI is a DCI format that supports scheduling of data of a plurality of cells, in other words, the first DCI is single DCI. The first DCI may include first indication information, indicating that an active BWP of a first secondary cell is a first dormant BWP. The first communication apparatus may further set the active BWP of the first secondary cell to the first dormant BWP based on the first indication information.

Based on the method in the first aspect, the single DCI may carry the first indication information, and the first communication apparatus may set the active BWP of the first secondary cell to the first dormant BWP based on the first indication information, so that dormancy of the first secondary cell is implemented, and power consumption is reduced.

According to a second aspect, a communication method is provided. The method may be implemented by a second communication apparatus. The second communication apparatus may be a network device or a component of the network device. An example in which the method is performed by the second communication apparatus is used. The method may be implemented by using the following steps: The second communication apparatus determines first downlink control information DCI, where a format of the first DCI is a DCI format that supports scheduling of data of a plurality of cells, the first DCI includes first indication information, and the first indication information indicates that an active BWP of a first secondary cell is a first dormant BWP. The second communication apparatus may further send the first DCI, and set the active BWP of the first secondary cell to the first dormant BWP.

Based on the method in the first aspect or the second aspect, the first DCI further includes second indication information, and the second indication information indicates N scheduled cells, where N is a positive integer. The scheduled cells include a primary cell and/or a secondary cell. In an example of an implementation, the second indication information may indicate a combination of the scheduled cells from a cell combination table of a first cell set. For example, the second indication information indicates an entry in the table, and a combination corresponding to the entry includes the scheduled cells. For example, the scheduled cell includes only the primary cell.

Based on the method in the first aspect or the second aspect, the N scheduled cells do not include the first secondary cell.

Based on this implementation, the scheduled cell and a dormant cell do not overlap. If the first communication apparatus finds that the scheduled cell indicated by the second indication information in the single DCI overlaps a dormant cell indicated by the first indication information, the first communication apparatus may drop or not process the first indication information, or drop or not process the first DCI. Alternatively, when a conflict exists between the scheduled cell and the dormant cell, a dormancy indication takes precedence.

Based on the method in the first aspect or the second aspect, the first DCI further includes third indication information indicating a first cell set, where the third indication information indicates that the N scheduled cells belong to the first cell set. When the first cell set includes a primary cell, N=1, and the scheduled cell is the primary cell. In other words, the first communication apparatus may set the first secondary cell to a dormant secondary cell based on the single DCI only when the scheduled cell indicated by the single DCI is the primary cell. In this application, the first cell set may be a largest set of scheduled cells. To be specific, each time the first DCI is used for scheduling, a candidate scheduled cell may be one or more cells in the first cell set.

Based on the method in the first aspect or the second aspect, the N scheduled cells further include a second secondary cell, and the first communication apparatus and/or the second communication apparatus may perform data transmission by using the second secondary cell. For example, the N scheduled cells further include the second secondary cell, or include a primary cell and the second secondary cell. The second secondary cell is different from the first secondary cell, and the first indication information does not indicate to set an active BWP of the second secondary cell to a dormant BWP. In other words, when the scheduled cell indicated by the single DCI includes at least one secondary cell other than the first secondary cell, the first communication apparatus may set the first secondary cell to a dormant secondary cell based on the single DCI.

Based on the method in the first aspect or the second aspect, the N scheduled cells may include the first secondary cell. The first communication apparatus may perform data transmission in the first secondary cell based on the second indication information. Correspondingly, the second communication apparatus may perform data transmission in the first secondary cell. Based on this implementation, the scheduled cell and a dormant cell may overlap, and when the scheduled cell and the dormant cell overlap, a dormancy indication takes precedence.

In an example, when no entry in a scheduled cell combination table includes only a primary cell, that is, all entries include at least one secondary cell, the second communication apparatus may indicate, by using the second indication information, an entry that includes the primary cell and at least one secondary cell, that is, the scheduled cells include the primary cell and the at least one secondary cell. In this case, only the primary cell may be scheduled to perform data transmission, and the secondary cell is not scheduled. Optionally, the first communication apparatus may determine, based on the first indication information, whether the secondary cell enters a dormant state. If the first indication information indicates that a secondary cell belonging to a same entry as the primary cell enters the dormant state, the first communication apparatus may cause the secondary cell to enter the dormant state. If the first indication information does not indicate that the secondary cell belonging to the same entry as the primary cell enters the dormant state, the first communication apparatus may determine that the secondary cell is not scheduled and does not enter the dormant state.

In another example, when no entry in a scheduled cell combination table includes only a primary cell, the second communication apparatus may indicate, by using the second indication information, an entry that includes the primary cell and at least one secondary cell, that is, the scheduled cells include the primary cell and the at least one secondary cell. In this case, the primary cell may be scheduled to perform data transmission. In addition, optionally, a secondary cell that does not enter a dormant state may be scheduled to perform data transmission. For example, the first communication apparatus may determine, based on the first indication information, whether a secondary cell belonging to a same entry as the primary cell enters the dormant state. If the first indication information indicates that the secondary cell belonging to the same entry as the primary cell enters the dormant state, the first communication apparatus may cause the secondary cell to enter the dormant state. In this case, such secondary cells are not scheduled. If the first indication information does not indicate that the secondary cell belonging to the same entry as the primary cell enters the dormant state, the first communication apparatus may determine that the secondary cell does not enter the dormant state, and the secondary cell may be scheduled to perform data transmission.

Based on this implementation, when the scheduled secondary cells include both the first secondary cell and the second secondary cell, the first communication apparatus and the second communication apparatus may perform data transmission by using the second secondary cell, to improve data transmission performance. In other words, the scheduled cell and the dormant cell may partially overlap. For example, when the scheduled cell combination table does not include an entry for scheduling only the second secondary cell, an entry that includes the first secondary cell and the second secondary cell may be chosen to be activated, and the first secondary cell is configured to be in the dormant state, so that the first communication apparatus performs transmission by using only the second secondary cell.

Based on the method in the first aspect or the second aspect, the first DCI further includes second indication information and third indication information. The third indication information indicates a first cell set. When the first cell set does not include a primary cell, a scheduled cell indicated by the second indication information is an empty set. In an example of an implementation, the second indication information may indicate a combination of the scheduled cells from a cell combination table of the first cell set. For example, the second indication information indicates an entry in the table, where a cell in the entry is an empty set, or the entry does not include a cell in the first cell set.

Based on the method in the first aspect or the second aspect, the first indication information specifically indicates an index of the first SCell, or indicates an index of one or more groups of dormant cells. The one or more groups of dormant cells include the first SCell.

Based on the method in the first aspect or the second aspect, the first DCI may further include a frequency domain resource assignment type field whose value is a specified value. In this case, the first indication information may include one or more bits, and each bit indicates whether an SCell enters a dormant state. Optionally, in this case, the first DCI does not include the second indication information, in other words, does not include information indicating the scheduled cell. Alternatively, the first DCI includes the second indication information, but the second indication information does not indicate or does not take effect. In other words, each bit indicates whether an SCell is the first SCell. Optionally, each of all the bits included in the first indication information corresponds to one SCell in a scheduled cell set, or each of all the bits included in the first indication information corresponds to one of all configured SCells. This is not specifically limited.

Based on the method in the first aspect or the second aspect, the frequency domain resource assignment type field whose value is the specified value includes an FDRA field corresponding to an SCell in a scheduled cell set. Resource allocation type fields whose values are the specified value may be FDRA fields corresponding to all cells. In addition, if a cell set indicated by a scheduled cell set indicator field in the first DCI includes a PCell, FDRA fields corresponding to SCells in the scheduled cell set other than the PCell are all set to the special value. In other words, in this case, the resource allocation type field whose value is the specified value may be the FDRA field corresponding to the SCell other than the PCell.

Based on the method in the first aspect or the second aspect, the one or more bits occupy one or more bits in the following fields in the first DCI: a modulation and coding scheme field, a new data indicator field, a redundancy version field, a hybrid automatic repeat request process number field, an antenna port field, and a demodulation reference signal sequence initialization field. Further, the field corresponds to a first scheduled cell indicated by the first DCI, or corresponds to a 1^{st} cell in a scheduled cell set indicated by the first DCI.

According to a third aspect, a communication apparatus is provided. The apparatus may implement the method according to the first aspect or the second aspect and any possible design of the first aspect or the second aspect. The apparatus has functions of the foregoing network device or first terminal apparatus. The apparatus is, for example, a terminal device, a functional module in the terminal device, a network device, or a functional module in the network device.

In an optional implementation, the apparatus may include modules that are in one-to-one correspondence with the methods/operations/steps/actions described in the first aspect or the second aspect. The module may be a hardware circuit, may be software, or may be implemented by a combination of the hardware circuit and the software. In an optional implementation, the apparatus includes a processing unit (sometimes also referred to as a processing module) and a communication unit (sometimes also referred to as a transceiver module, a communication module, or the like). A transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a collective term for these functional modules.

For example, when the apparatus is configured to perform the method described in the first aspect or the second aspect, the apparatus may include the communication unit and the processing unit.

According to a fourth aspect, an embodiment of this application further provides a communication apparatus, including a processor configured to execute a computer program (or computer-executable instructions) stored in a memory. When the computer program (or the computer-executable instructions) is executed, the apparatus is caused to perform the method according to the first aspect or the second aspect and the possible implementations of the first aspect or the second aspect.

In a possible implementation, the processor and the memory are integrated together.

In another possible implementation, the memory is located outside the communication apparatus.

The communication apparatus further includes a communication interface. The communication interface is used for communication between the communication apparatus and another device, for example, for data and/or signal sending or receiving. For example, the communication interface may be a transceiver, a circuit, a bus, a module, or a communication interface of another type.

According to a fifth aspect, a computer-readable storage medium is provided. The computer-readable storage medium is configured to store a computer program or instructions. When the computer program or the instructions are run, the method according to any one of the first aspect or the second aspect and the possible implementations of the first aspect or the second aspect is implemented.

According to a sixth aspect, a computer program product including instructions is provided. When the computer program product runs on a computer, the method according to any one of the first aspect or the second aspect and the possible implementations of the first aspect or the second aspect is implemented.

According to a seventh aspect, an embodiment of this application further provides a communication apparatus, configured to perform the method according to the first aspect or the second aspect and the possible implementations of the first aspect or the second aspect.

According to an eighth aspect, a chip system is provided. The chip system includes a logic circuit (which may alternatively be understood as that the chip system includes a processor, and the processor may include a logic circuit and the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending and receiving functions in the method according to any one of the first aspect or the second aspect and the possible implementations of the first aspect or the second aspect. The logic circuit may be further configured to transmit a message to the input/output interface, or receive, from the input/output interface, a message from another communication apparatus. The chip system may be configured to implement the method according to any one of the first aspect or the second aspect and the possible implementations of the first aspect or the second aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a ninth aspect, a communication system is provided. The communication system may include at least one terminal apparatus and a network device. Any terminal apparatus may be configured to perform the method according to any one of the first aspect and the possible implementations of the first aspect. The network device may be configured to perform the method according to any one of the second aspect and the possible implementations of the second aspect.

For technical effects brought by the second aspect to the ninth aspect, refer to descriptions in the first aspect. Details are not described herein again.

### BRIEF DESCRIPTION OF DRAWINGS

FIG. 1 is a diagram of an architecture of a wireless communication system according to an embodiment of this application;
FIG. 2 is a schematic flowchart of a communication method according to an embodiment of this application;
FIG. 3 is a diagram of a structure of first DCI according to an embodiment of this application;
FIG. 4 is a diagram of another structure of first DCI according to an embodiment of this application;
FIG. 5 is a diagram of another structure of first DCI according to an embodiment of this application;
FIG. 6 is a diagram of another structure of first DCI according to an embodiment of this application;
FIG. 7 is a diagram of another structure of first DCI according to an embodiment of this application;
FIG. 8 is a diagram of a structure of a communication apparatus according to an embodiment of this application; and
FIG. 9 is a diagram of another structure of a communication apparatus according to an embodiment of this application.

### DESCRIPTION OF EMBODIMENTS

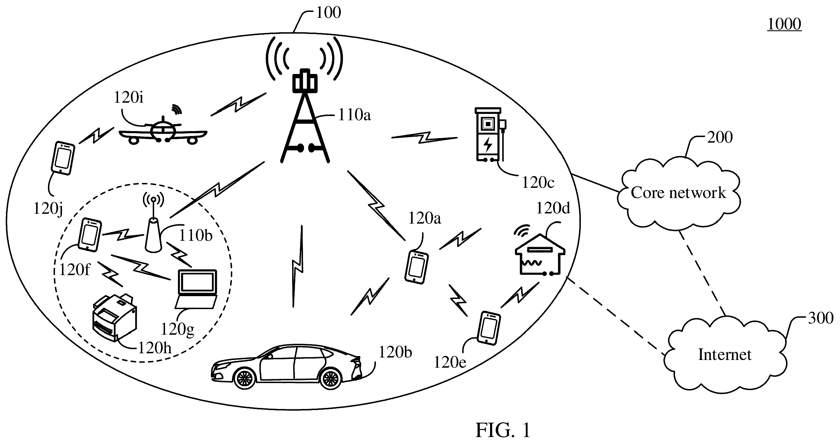

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is only a diagram. The communication system may further include other network devices, for example, may further include a wireless relay device and a wireless backhaul device, which are not shown in FIG. 1.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes some functions of a base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to technical specifications related to the 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, the network device is used as an abbreviation of the radio access network device, and the base station is used as an example of the radio access network device.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 each may be referred to as a communication apparatus having a function of a base station, and 120a to 120j in FIG. 1 each may be referred to as a communication apparatus having a function of a terminal.

Communication between the base station and the terminal, between the base stations, or between the terminals may be performed by using a licensed spectrum, or may be performed by using an unlicensed spectrum, or may be performed by using both the licensed spectrum and the unlicensed spectrum. Communication may be performed by using a spectrum below 6 GHz, or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios, such as the smart grid, the industrial control, the smart transportation, and the smart city. The function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

It may be understood that, in embodiments of this application, a physical downlink shared channel (physical downlink shared channel, PDSCH), a physical downlink control channel (physical downlink control channel, PDCCH), and a physical uplink shared channel (physical uplink shared channel, PUSCH) are merely examples of a downlink data channel, a downlink control channel, and an uplink data channel respectively. In different systems and different scenarios, a data channel and a control channel may have different names. This is not limited in embodiments of this application.

In a CA scenario, there may be a plurality of cells that provide services for UE, in other words, the terminal device has a plurality of serving cells or carriers. In this application, it may be considered that a carrier and a cell are equivalent and may be replaced with each other. For example, the plurality of serving cells of the terminal device include one PCell and one or more SCells.

Currently, the 3GPP proposes that a single piece of DCI is used for scheduling PDSCHs or PUSCHs on a plurality of carriers. Compared with that each piece of DCI can schedule only a PDSCH or PUSCH on one carrier, this can reduce overheads of a control channel. The single piece of DCI is usually referred to as single DCI, multi-carrier scheduling DCI, or multi-cell scheduling DCI. The single DCI may be used for scheduling a data channel of one or more carriers, or support scheduling of data channels of a plurality of cells. A format of single DCI used for scheduling the PUSCH may be a DCI format 0_3, and a format of single DCI used for scheduling the PDSCH may be a DCI format 1_3. In this application, the "carrier" and the "cell" may be used interchangeably in a scenario in which no logical conflict occurs.

DCI counterpart to the single DCI is referred to as legacy DCI (legacy DCI). Based on an existing CA mechanism, if a base station wants to schedule the UE to perform PDSCH or PUSCH transmission simultaneously on a plurality of carriers, the base station needs to send a plurality of pieces of legacy DCI for scheduling, where each carrier is scheduled by using one piece of legacy DCI, in other words, the legacy DCI can schedule only data of one cell. When a self-carrier scheduling manner is used, legacy DCI for scheduling a PDSCH or a PUSCH on one carrier is also sent on the carrier. However, when a cross-carrier scheduling manner is used, legacy DCI for scheduling a PDSCH or a PUSCH on one carrier may be sent on another carrier. This achieves an effect that a plurality of pieces of DCI used for scheduling a plurality of carriers are sent only on one carrier. For example, a DCI format corresponding to the legacy DCI is a DCI format 0_0, a DCI format 1_0, a DCI format 0_1, a DCI format 1_1, a DCI format 0_2, or a DCI format 1_2.

Based on the legacy DCI, the base station may indicate, by using the DCI, an SCell to enter a dormant state. However, with application of the single DCI, a dormancy indication of the SCell is incompatible with the single DCI. Consequently, the base station cannot indicate, to the UE by using the single DCI based on an SCell dormancy indication (SCell dormancy indication) field, specific SCells that can enter the dormant state, and therefore the UE cannot save energy or reduce power consumption, affecting standby time of the terminal.

When a specific SCell is indicated as dormancy, the UE in the SCell switches from a current active (active) downlink BWP to a dormant BWP (dormant BWP). In the dormant BWP, the UE does not need to monitor a PDCCH, receive a PDSCH, report channel state information (channel state information, CSI), or perform another operation. The SCell dormancy indication field may indicate whether one or more SCells enter the dormant state. Specifically, the SCell dormancy indication field may indicate one or more groups of SCells to enter the dormant state, and/or indicate one or more groups of SCells to enter a non-dormant state.

To cause the UE to determine, based on the SCell dormancy indication field, whether one or more SCells enter the dormant state, the legacy DCI needs to satisfy some conditions to indicate the SCell to enter the dormant state. For example, when the format of the legacy DCI is the DCI format 0_1 or the DCI format 1_1, the legacy DCI does not include a carrier indication field (carrier indication field, CIF), that is, only self-scheduling is supported. Alternatively, a value of the CIF field in the legacy DCI is set to 0, that is, only self-scheduling is performed. In other words, only when the UE identifies that the legacy DCI does not include the CIF field or the value of the CIF field is 0, the UE is triggered to determine, based on the SCell dormancy indication field, specific SCells that enter the dormant state. However, the single DCI does not include a CIF field. Therefore, a mechanism in the legacy DCI cannot be still used to trigger the UE to determine, based on the SCell dormancy indication field, an SCell that needs to enter the dormant state. Consequently, the UE cannot accurately identify the SCell that needs to enter the dormant state. For example, the UE may not cause, based on a dormancy indication, the SCell to enter the dormant state, increasing energy consumption of the UE. For another example, the UE may fail to perform data transmission based on scheduling of the single DCI.

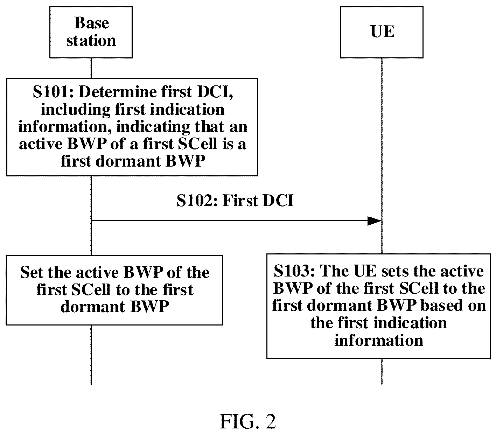

This application provides a communication method, to propose a cell dormancy indication solution compatible with single DCI, so as to improve reliability of a solution of indicating SCell dormancy based on the single DCI, so that a terminal device can reduce power consumption, and standby time of the terminal device is increased. The method may be performed by the terminal device or a module used in the terminal device, and a network device or a module used in the network device. The following describes the method with reference to FIG. 2. In FIG. 2, an example in which the method is performed by UE and a base station is used for description.

S101: The base station determines first DCI.

A format of the first DCI is a DCI format that supports scheduling of data of a plurality of cells, in other words, the first DCI is single DCI. For example, the format of the first DCI may be a DCI format 0_3 or a DCI format 1_3.

The first DCI includes first indication information, and the first indication information may indicate that an active BWP of a first SCell is a first dormant BWP. The first dormant BWP may be a dormant BWP configured for the first SCell. When the first dormant BWP is the active BWP, the first SCell enters a dormant state. In this application, setting an active BWP of an SCell to a dormant BWP may also be referred to as switching the SCell to be in an activated state.

Optionally, the first indication information may include an index of the first dormant BWP. In addition, the first indication information may alternatively only indicate the first SCell to enter the dormant state. The UE determines the index of the first dormant BWP based on a configuration. For example, an index of a dormant BWP of any SCell may be indicated by the base station by using a radio resource control (radio resource control, RRC) message, a MAC-control element (MAC-control element, MAC CE), DCI, or another message, or may be preconfigured or predefined in the UE. When the first indication information indicates the first SCell to enter the dormant state, the UE and/or the base station may query, based on an index configuration of the dormant BWP, the index of the first dormant BWP corresponding to the first SCell.

It may be understood that the first SCell in this application may be an SCell in a group of SCells, the group of SCells may include one or more SCells, and the first indication information may indicate all SCells in the group of SCells to enter the dormant state.

For example, the first indication information may indicate one or more groups of SCells to enter the dormant state; or the first indication information may indicate one or more groups of SCells to enter a non-dormant state; or the first indication information may indicate one or more groups of SCells to enter the dormant state, and indicate one or more other groups of SCells to enter the non-dormant state. If the first indication information indicates an SCell that enters the dormant state, the SCell indicated by the first indication information is the first SCell. In addition, if the first indication information indicates an SCell that is in a plurality of SCells and that enters the non-dormant state, the first SCell may include an SCell in the plurality of SCells other than the SCell indicated by the first indication information.

The following describes implementations of the first DCI and the first indication information with reference to embodiments. Only an overall solution procedure is described herein, and details are not described temporarily.

S102: The base station sends the first DCI. Correspondingly, the UE receives the first DCI.

Optionally, the base station may send the first DCI by using a primary scheduled cell. For example, the primary scheduled cell may be a PCell or an SCell. Optionally, the PCell or an SCell other than the first SCell may be selected as the primary scheduled cell of the first DCI, that is, the first SCell is not the primary scheduled cell, to avoid a conflict between scheduling of the first DCI and dormancy indicated by the first DCI.

An example in which the primary scheduled cell is the PCell is used. The base station may further configure, by using an RRC parameter, a primary scheduled cell in one or more cell sets as the PCell. Correspondingly, the UE may monitor the first DCI in the PCell. Optionally, a scheduled cell set indicator field in the first DCI may indicate a scheduled cell set. Optionally, the scheduled cell set is one of one or more cell sets in which the primary scheduled cell is configured as the PCell.

S103: The UE sets the active BWP of the first SCell to the first dormant BWP based on the first indication information.

In an example implementation of S103, for the first SCell, the UE may set the first dormant BWP of the first SCell to an active downlink BWP, that is, cause the first SCell to enter the dormant state.

In addition, the base station may set the active BWP of the first SCell of the UE to the first dormant BWP. It may be understood that the action of setting the active BWP of the first SCell by the base station may be performed before or after S102. This is not specifically limited in this application. For example, after determining that the first SCell of the UE is in the dormant state, the base station may first determine and/or send the first DCI, and then set the active BWP of the first SCell to the first dormant BWP; or after determining that the first SCell is in the dormant state, the base station may first set the active BWP of the first SCell to the first dormant BWP, and then determine and/or send the first DCI; or may simultaneously set the active BWP of the first SCell to the first dormant BWP and determine and/or send the first DCI.

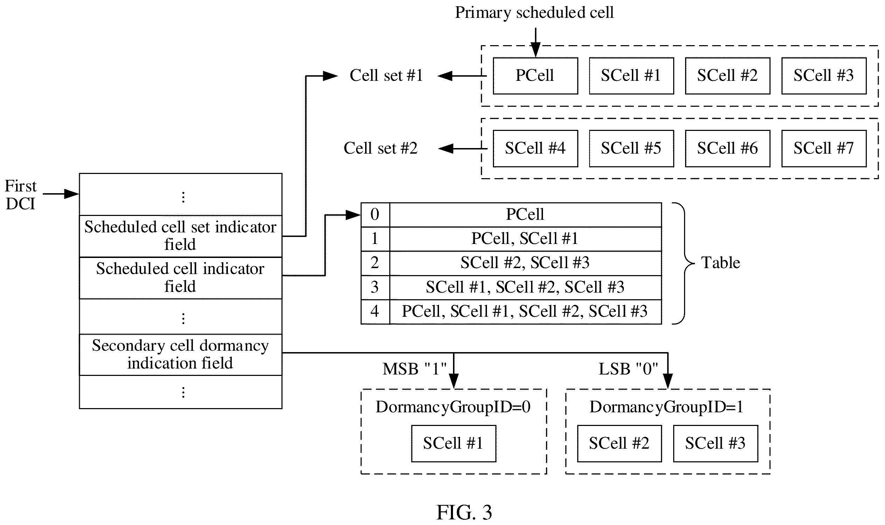

Based on the method in FIG. 3, the first DCI may carry the first indication information, and a first communication apparatus may set the active BWP of the first SCell to the first dormant BWP based on the first indication information, so that dormancy of the first SCell is implemented, and power consumption is reduced.

The following describes the implementation of the first DCI in this application with reference to an embodiment.

Optionally, in the first DCI, the first indication information indicates one or more groups of SCells to enter the dormant state. In this case, the first indication information may be an SCell dormancy indication field, or another field in the first DCI may be reused. The following describes, with reference to Manner 1, an implementation in which the first indication information is the SCell dormancy indication field. In addition, with reference to Manner 2, an implementation in which the another field in the first DCI is reused for the first indication information is further described.

Manner 1: The first indication information is the SCell dormancy indication field, indicating one or more SCell dormancy groups to enter the dormant state, and/or indicating one or more SCell dormancy groups to enter the non-dormant state. Alternatively, the first indication information includes one or more SCell groups configured by the base station, each configured SCell group corresponds to one bit in the SCell dormancy indication field, and indexes of the configured SCell groups, arranged in ascending order, are in one-to-one correspondence with bits in the SCell dormancy indication field from a most significant bit (most significant bit, MSB) to a least significant bit (least significant bit, LSB). Each bit in the SCell dormancy indication field may indicate a corresponding SCell group to enter the dormant state or the non-dormant state. Manner 1 may also be referred to as a group indication manner.

In Manner 1, the configured SCell group is equivalent to an SCell dormancy group (dormancy group), or is equivalent to a dormancy group. The configured SCell group may be predefined, or may be indicated by the base station to the UE, or may be indicated by the UE to the base station. In this application, the predefinition includes but is not limited to a manner of predefinition by using a protocol, predefinition by using pre-stored configuration information, and the like. A manner of indicating the configured SCell group by the base station to the UE includes but is not limited to indicating the configured SCell group to the UE by using information, a message, or signaling, such as an RRC message, a MAC CE, or DCI. A manner of indicating the configured SCell group by the UE to the base station includes but is not limited to indicating the configured SCell group to the base station by using uplink information, a message, or signaling, such as UCI.

For example, when the SCell dormancy group is configured by using the RRC message, the RRC message may carry a dormancy group within active time (dormancyGroupWithinActiveTime) parameter, indicating an SCell dormancy group identifier (DormancyGroupID) corresponding to each SCell. SCells with same DormancyGroupID belong to a same configured SCell group. In other words, the SCell dormancy group identification may be used for identifying a configured SCell group to which each SCell belongs. Correspondingly, in the first DCI, the first indication information may indicate whether each SCell dormancy group enters the dormant state. For example, the first indication information may include bits whose quantity is the same as a quantity of SCell dormancy groups, and each bit indicates one dormancy group to enter the dormant state or the non-dormant state.

For example, an indication of the dormancy group within active time may be carried in the RRC message, for example, used as a configuration of an SCell. The RRC message may further carry a dormant BWP identifier (dormantBWP-Id) indication, indicating an index of a dormant BWP of each SCell, that is, indicating a dormant BWP of the SCell. When the SCell enters the dormant state, the UE does not need to monitor a physical downlink control channel PDCCH on the dormant BWP, and does not receive a physical downlink shared channel PDSCH or the like. In addition, the RRC message may further carry a first within active time BWP identifier (firstWithinActiveTimeBWP-Id) parameter, used for configuring a BWP index used when the dormant BWP is switched back to a non-dormant BWP in the SCell.

In an example, when a specific bit in the SCell dormancy indication field indicates "1", it indicates that an SCell in the SCell dormancy group enters the non-dormant state, and for an activated SCell in a corresponding SCell group, an active BWP is switched to or remains at an active downlink bandwidth part (active DL BWP). For example, if a current (current) active downlink BWP is a dormant BWP, the UE sets a downlink BWP configured by using the firstWithinActiveTimeBWP-Id parameter to an active DL BWP, that is, the UE switches from the dormant BWP to a BWP corresponding to firstWithinActiveTimeBWP-Id. If the current active downlink BWP is not the dormant BWP, the active DL BWP is the current active BWP. That is, BWP switching may not be performed, in other words, the UE continues to operate on the current DL BWP. In addition, when a specific bit in the SCell dormancy indication field indicates "0", it indicates that an SCell in the SCell dormancy group enters the dormant state, and for an activated SCell in a corresponding SCell group, if a current active downlink BWP is a non-dormant BWP, the UE sets a dormant BWP of the SCell to an active BWP; or if the current active downlink BWP of the SCell is a dormant BWP, BWP switching may not be performed.

For example, FIG. 3 is used as an example. DormancyGroupID=0 corresponding to an SCell #1 indicates that the SCell #1 belongs to an SCell dormancy group #0. Both an SCell #2 and an SCell #3 correspond to DormancyGroupID=1, indicating that the SCell #2 and the SCell #3 belong to an SCell dormancy group #1. Because two dormancy groups are configured, a bit width of the SCell dormancy indication field is two bits, where one bit of the MSB corresponds to the dormancy group #0, and one bit of the LSB corresponds to the dormancy group #1. The MSB bit being "1" indicates that all activated SCells included in the dormancy group #0 are switched to or remain at the active DL BWP, that is, indicates that the SCells in the dormancy group enter the non-dormant state. If a current active downlink BWP of the SCell is a dormant BWP, the downlink BWP configured by using the firstWithinActiveTimeBWP-Id parameter is switched to. If the current active downlink BWP of the SCell is not the dormant BWP, the active DL BWP is the current active downlink BWP. That is, BWP switching may not be performed, in other words, the UE continues to operate on the current DL BWP.

In addition, as shown in FIG. 3, the LSB bit being "0" indicates that all activated SCells included in the dormancy group #1 are switched to a downlink BWP configured by using a dormantBWP-Id parameter. It may be understood that an SCell #x in this application represents an SCell whose index is x.

It can be learned that in Manner 1, the first indication information may include one or more bits, and each bit corresponds to one SCell dormancy group. For example, a value of each bit being 0 (or 1) indicates that a corresponding SCell dormancy group enters the dormant state, and a value of each bit being 1 (or 0) indicates that a corresponding SCell dormancy group enters the non-dormant state. Optionally, SCells of the UE may be grouped into k groups. Correspondingly, the first indication information may occupy k bits. For example, k=5.

In an example, when a quantity of SCell dormancy groups is 2, to be specific, the SCell dormancy groups are the SCell dormancy group #0 and the SCell dormancy group #1, the first indication information includes two bits. When the first indication information includes a bit 01, it may indicate that the SCell dormancy group #0 enters the dormant state, and the SCell dormancy group #1 enters the non-dormant state. In other words, FIG. 3 is still used as an example. When the first indication information (that is, the secondary cell dormancy indication field in the figure) includes a bit 10, the first indication information may indicate the SCell #1 to enter the non-dormant state, and indicate the SCell #2 and the SCell #3 to enter the dormant state.

Optionally, the first SCell may be an SCell in an SCell dormancy group that is indicated to enter the dormant state. To be specific, the base station may indicate, by using the first indication information based on a transmission requirement and an energy saving requirement of the UE, one or more SCell dormancy groups to enter the dormant state, where an SCell in the one or more SCell dormancy groups is the first SCell.

In a possible embodiment, the first DCI may further include second indication information, used for determining or indicating N scheduled cells, where N is a positive integer. Therefore, the first SCell may further indicate the scheduled cell, to implement data scheduling. The scheduled cells in this application may include a PCell and/or an SCell.

Optionally, the first SCell and the scheduled cell may belong to a same cell set (cell set), or may belong to different cell sets. Each cell set may include one or more cells. A cell included in any cell set may be predefined, or may be indicated by the base station to the UE, or may be indicated by the UE to the base station.

In an implementation of the second indication information, the second indication information may be a scheduled cell indicator (scheduled cell indicator) field, indicating the N scheduled cells from the scheduled cell set. For example, the second indication information may include or indicate indexes (cell indexes) of the N scheduled cells. The following uses an example in which the scheduled cell indicator field is used as the second indication information for description.

In this implementation, the first DCI may further include third indication information, indicating a first cell set. The N scheduled cells indicated by the second indication information are included in the first cell set. The second indication information may indicate the N scheduled cells from the first cell set. For example, the third indication information may indicate an index of the scheduled cell set, and/or the second indication information may indicate the index of the scheduled cell. The first cell set may be a largest set of the scheduled cells. To be specific, each time the first DCI is used for scheduling, a candidate scheduled cell may be one or more cells in the first cell set.

Optionally, the third indication information may be a scheduled cell set indicator (scheduled cell set indicator) field, indicating the scheduled cell set. For example, a value of the scheduled cell set indicator field is the index of the scheduled cell set, and the scheduled cell set is the first cell set. The following uses an example in which the scheduled cell set indicator field is used as the third indication information for description.

In an example, the scheduled cell set indicator field may indicate a cell set from a plurality of cell sets, and the cell set is the scheduled cell set. For example, the scheduled cell set indicator field may carry an index of the first cell set. FIG. 3 is still used as an example. A cell set #1 includes a PCell, an SCell #1, an SCell #2, and an SCell #3, and a cell set #2 includes an SCell #4, an SCell #5, an SCell #6, and an SCell #7. The value of the scheduled cell set indicator field may be configured to 1, in other words, the scheduled cell set indicator field carries an index of the Cell set #1, indicating that the scheduled cell set is the Cell set #1. Alternatively, the value of the scheduled cell set indicator field may be configured to 2, in other words, the scheduled cell set indicator field carries an index of the Cell set #2, indicating that the scheduled cell set is the Cell set #2.

Optionally, the scheduled cell indicator field may specifically indicate an entry (entry) in a scheduled cell combination table (table), or may be an index of a scheduled cell included in an entry. In this application, the scheduled cell combination table may also be briefly referred to as a table. The table is associated with a cell set, and the base station may indicate an association relationship by using an RRC parameter. Therefore, when the scheduled cell set indicator field indicates the scheduled cell set, the scheduled cell combination table associated with the cell set may be determined based on the association relationship. The table may include at least one entry, any entry represents a combination of scheduled cells in the scheduled cell set, and each combination may include one or more cells. In other words, the scheduled cell indicator field may include an index of the entry in the scheduled cell combination table. The scheduled cell combination table may be configured by using an RRC parameter, and the RRC parameter is, for example, ScheduledCellCombo-ListDCI-1-3, ScheduledCellCombo-ListDCI-0-3, or another parameter. When the UE detects a DCI format 0_3 or a DCI format 1_3, and a scheduled cell set indicator field in DCI indicates a scheduled cell set, a scheduled cell combination table indicated by a scheduled cell indicator field in the DCI is associated with the indicated scheduled cell set, and one or more cells included in any entry in the scheduled cell combination table belong to the indicated scheduled cell set.

A cell combination in any entry in the scheduled cell combination table may include only a PCell, or include the PCell and at least one SCell, or include no PCell but include one or more SCells. For example, with reference to FIG. 3, an example table includes cell combinations whose indexes are 0 to 4, and a scheduled cell indicator field may include any one of the indexes 0 to 4, indicating that the UE receives PDSCH scheduling or sends a PUSCH in all cells included in the scheduled cell combination corresponding to the index, that is, the scheduled cells are all cells included in the combination. For example, when a value of the scheduled cell indicator field is 0, it indicates that the scheduled cell is the PCell; when the value of the scheduled cell indicator field is 1, it indicates that the scheduled cells are the PCell and the SCell #1; and so on.

The at least one entry in the scheduled cell combination table may be predefined, or may be indicated by the base station to the UE, or may be indicated by the UE to the base station. For example, the base station may further indicate the table shown in FIG. 3 to the UE by using the RRC message, and indicate, in the first DCI by using the scheduled cell, to activate one of the entries, so as to implement an indication of the scheduled cell.

In a possible implementation, when the first cell set indicated by the third indication information in the first DCI includes a PCell, the second indication information indicates one scheduled cell, that is, N=1, and the scheduled cell is the PCell. For example, if the UE detects a piece of single DCI, for example, a DCI format 0_3 or a DCI format 1_3, in the single DCI, the scheduled cell set indicator field indicates a cell set, the scheduled cell indicator field indicates an entry in a scheduled cell combination table associated with the cell set, and a cell in the entry is the PCell, the UE may determine, based on an SCell dormancy indication field in the single DCI, that one or more dormancy groups enter the dormant state or the non-dormant state. In this example, the single DCI is the first DCI, the scheduled cell indicator field is the second indication information, the scheduled cell set indicator field is the third indication information, and the SCell dormancy indication field indicating one or more dormancy groups to enter the dormant state is the first indication information.

It may be understood that one or more cells indicated by the SCell dormancy indication field definitely do not conflict with one or more cells indicated by the scheduled cell indicator field, that is, two pieces of indication information do not indicate a same cell index. In addition, under a condition that the scheduled cell set indicated by the single DCI includes the PCell, that the entry indicated by the scheduled cell indicator field includes only the PCell, that is, the scheduled cell is the PCell is a determining condition for the UE to determine, based on the SCell dormancy indication field, whether an SCell enters the dormant state. That is, only when the UE determines that this condition is satisfied, the UE uses the SCell dormancy indication field to determine that an SCell in the one or more dormancy groups enters the dormant state or the non-dormant state; otherwise, the UE ignores (ignores) the SCell dormancy indication field, or the UE does not process (does not process) the SCell dormancy indication field. For example, data transmission may be performed only based on the scheduled cell indicated by the single DCI.

In another possible implementation, when the first cell set indicated by the third indication information included in the first DCI does not include the PCell, the scheduled cell indicated by the second indication information is an SCell with a smallest index. For example, in the single DCI, if an entry in the scheduled cell combination table indicated by the scheduled cell indicator field includes only an SCell with a smallest cell index in the cell set, the UE determines, based on the SCell dormancy indication field in the DCI, that one or more dormancy groups enter the dormant state or the non-dormant state. In this example, the single DCI is the first DCI, the scheduled cell indicator field is the second indication information, the scheduled cell combination table and a cell set indicated by the scheduled cell set indicator field are associated, the scheduled cell set indicator field is the third indication information, and the SCell dormancy indication field used for determining that one or more groups enter the dormant state is the first indication information.

It may be understood that, in this example, that the entry indicated by the scheduled cell indicator field includes only the SCell with the smallest cell index in the cell set is a determining condition for the UE to determine, based on the SCell dormancy indication field, whether an SCell enters the dormant state.

In another possible implementation, when the cell set indicated by the scheduled cell set indicator field included in the single DCI does not include a PCell, an entry in the scheduled cell combination table indicated by the scheduled cell indicator field does not include a cell index of any cell in the cell set; or the indicated entry does not indicate any cell, does not include an index of any cell, does not include any scheduling-related cell, or does not include any element or any piece of indication information; or the indicated entry is a reserved entry, the UE determines, based on the SCell dormancy indication field in the single DCI, that one or more dormancy groups enter the dormant state or the non-dormant state, in other words, determines, based on the SCell dormancy indication field, to set the active BWP of the first SCell to the first dormant BWP or another BWP. The single DCI is the first DCI, the scheduled cell set indicator field is used as an example of the third indication information, the scheduled cell indicator field may be used as an example of the second indication information, and the SCell dormancy indication field is used as an example of the first indication information. In this case, the second indication information indicates that the scheduled cell is an empty set, or does not indicate a scheduled cell. It may be understood that the entry is a special entry or a predefined entry in the scheduled cell combination table, and is specifically used for triggering the UE to determine, based on the SCell dormancy indication field, whether the first SCell enters the dormant state. In this embodiment, the scheduled cell indicator field may indicate that the scheduled cell is an empty set. In other words, in this case, the scheduled cell indicator field does not indicate the scheduled cell.

In another implementation of the second indication information, the first DCI may further indicate, through frequency domain resource assignment (frequency domain resource assignment, FDRA), a location of a frequency domain resource block of a PDSCH or a PUSCH scheduled in at least one cell in the scheduled cell set. The at least one cell is a scheduled cell. Therefore, in this implementation, the second indication information may include an FDRA field of the scheduled cell, in other words, a cell corresponding to an FDRA field configured as a normal value is the scheduled cell. In this implementation, an example in which the FDRA field of the scheduled cell is used as the second indication information is used for description.

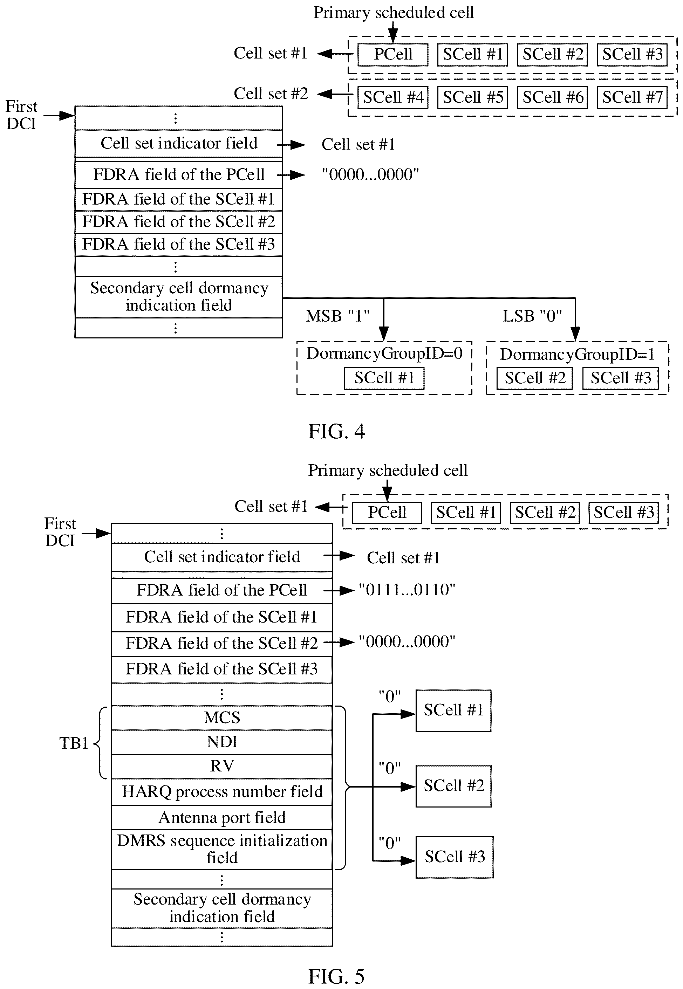

The first DCI may include a plurality of FDRA fields, and each FDRA field is used for carrying FDRA of one cell. For example, as shown in FIG. 4, the first DCI may include FDRA of a PCell, FDRA of an SCell #1, FDRA of an SCell #2, FDRA of an SCell #3, .... When any cell is not scheduled, an FDRA field of the cell is configured as a special value. In this case, the FDRA field is invalid, to be specific, does not indicate a frequency domain resource. When any cell is scheduled, an FDRA field of the cell is configured as a normal value, in other words, in this case, the FDRA field indicates a frequency domain resource used by the UE for data transmission in the cell. In other words, when the FDRA field is configured as a special value, a cell corresponding to the FDRA field is not scheduled for data transmission. When the FDRA field is configured as a non-special value or is configured as a normal value, it indicates that the cell corresponding to the FDRA field is scheduled for data transmission. The special value may be predefined, or may be indicated by the base station to the UE, or may be indicated by the UE to the base station. For example, the special value is all 0s or all 1s. For details, refer to the following descriptions in Manner 2.

Optionally, the FDRA field of the scheduled cell may be used in combination with the scheduled cell set indicator field. In other words, the FDRA field indicates that one or more cells in the cell set indicated by the scheduled cell set indicator field are scheduled cells. For example, if the first DCI includes the scheduled cell set indicator field, and the scheduled cell set indicator field indicates a cell set #1, the first DCI includes FDRA fields of all cells in the cell set #1. All FDRA fields are arranged from an MSB to an LSB in ascending order of cell indexes. To be specific, from the MSB to the LSB, an information bit of an FDRA field of a cell #a is followed by an information bit of an FDRA field corresponding to a cell #b, where b is a cell index in the cell set #1 that is closest to a cell index a and greater than the cell index a, and a and b are both positive integers. In addition, the FDRA field of the scheduled cell may alternatively be used independently of the scheduled cell set indicator field. For example, the first DCI may not include the scheduled cell set indication field, and FDRA fields corresponding to all cells indicate whether all the cells are scheduled. Therefore, the FDRA field corresponding to the scheduled cell may be used for determining scheduled cells in all the cells.

The foregoing describes a manner in which the first indication information indicates the first SCell by using Manner 1.

In a possible embodiment, the first SCell indicated by the first indication information is not a scheduled cell, in other words, the N scheduled cells indicated by the second indication information do not include the first SCell.

For example, the scheduled cell is a PCell, or the scheduled cell includes the PCell and a second SCell other than the first SCell, or the scheduled cell includes the second SCell other than the first SCell. It may be understood that in this scenario, one or more cell indexes indicated by the scheduled cell indicator field do not partially or completely overlap a cell index of one or more SCells that enter the dormant state and that are indicated by the SCell dormancy indication field, that is, there is no conflict. In other words, the base station does not indicate, to the UE by using the first DCI, that any cell has both data scheduling and enters the dormant state, and the base station ensures that such an indication or configuration does not occur. It may also be understood as that the UE does not expect (does not expect) monitoring or receiving a piece of DCI indicating that the UE receives a PDSCH/sends a PUSCH in any cell in a scheduled cell set and also indicating the cell to enter the dormant state. If the UE monitors or receives a piece of first DCI indicating that the UE receives a PDSCH or sends a PUSCH in any cell in a scheduled cell set and indicating the cell to enter the dormant state, the UE understands (assumes) that the first DCI is error DCI or the scenario is an error scenario (error case), and the UE does not process the first DCI, skips (skips) processing the first DCI, or drops (drops) the first DCI.

In an example, the N scheduled cells may include a second SCell, or include a PCell and the second SCell. The first SCell is different from the second SCell, or the second SCell is one or more SCells other than the first SCell. In this example, the first SCell does not conflict with the scheduled cell, in other words, the first indication information does not conflict with the second indication information. That is, the first indication information does not indicate the second SCell to enter the dormant state, in other words, the first indication information does not indicate that an active BWP of the second SCell is set to a dormant BWP.

Optionally, in this example, the UE and/or the base station may perform data transmission by using the second SCell in the scheduled cell. For example, the UE may send a PUSCH and/or receive a PDSCH by using the second SCell. In addition, the UE may further set the active BWP of the first SCell to the first BWP, that is, cause the first SCell to enter the dormant state. Therefore, same DCI may indicate dormancy of the SCell, and may be used for scheduling data transmission.

In addition, because an entry (entry) in the scheduled cell combination table includes a cell index of one or more cells, the SCell dormancy indication field performs indication by using an SCell group, and an indication granularity is coarse, it is difficult for the base station to avoid a conflict between the scheduled cell indicator field and the SCell dormancy indication field, in other words, the scheduled cell indicator field and the SCell dormancy indication field indicate one or more same cell indexes. If the N scheduled cells include the first SCell, in other words, the first indication information conflicts with the second indication information, processing may be performed in any one of the following manners.

Manner A: When the N scheduled cells indicated by the second indication information include the first SCell, the UE performs data transmission in the first SCell based on the second indication information. Correspondingly, the base station may perform data transmission in the first SCell, in other words, the base station does not set the active BWP of the first SCell to the first dormant BWP. Therefore, in Manner A, the UE performs data transmission in the first SCell based on the second indication information, and does not set the active BWP of the first SCell to the first dormant BWP. In other words, in Manner A, when the first indication information conflicts with the second indication information, the UE may perform data transmission based on the second indication information by default, to ensure validity of a data link, reduce a delay caused by a data transmission failure caused because the first SCell enters the dormant state, and improve data transmission reliability. Optionally, if the scheduled cell set does not include a PCell, the UE may perform processing in Manner A by default when a cell index of the first SCell conflicts with a cell index of the scheduled cell, to be specific, preferentially perform data transmission based on the second indication information included in the first DCI.

Manner B: When the N scheduled cells indicated by the second indication information include the first SCell, the UE sets the active BWP of the first SCell to the first dormant BWP based on the first indication information. In other words, in Manner B, when the first indication information conflicts with the second indication information, the UE does not perform data transmission based on the second indication information, and the UE may cause, by default based on the first indication information, an SCell to enter the dormant state, to reduce power consumption as much as possible and improve a battery life of the terminal.

It may be understood that, with reference to Manner B, when the N scheduled cells include the first SCell, the UE may set the active BWP of the first SCell to the first dormant BWP based on the first indication information, and perform data transmission in at least one scheduled cell based on the second indication information. The at least one scheduled cell may be at least one cell in the N scheduled cells other than the first SCell.

For example, when the second indication information is a scheduled cell indicator field, the scheduled cells are a combination of a plurality of cell combinations, and therefore may include a plurality of cells. If the base station needs to schedule only some cells in the combination, and the some cells are not separately used as a cell combination, the base station may cause, by using the first indication information, unscheduled cells in the combination to enter the dormant state, so that data transmission can be performed only in some cells in the combination.

FIG. 3 is still used as an example. The base station needs to schedule the UE to perform data transmission in the SCell #1, and there is no to-be-transmitted data in another cell. However, based on the table shown in FIG. 3, there is no combination solution in which only the SCell #1 is used as a scheduled cell. If cell scheduling is performed based on a combination in the table, the UE performs operations such as PDCCH monitoring and PDSCH receiving in at least one cell other than the SCell #1. Consequently, power consumption of the UE is increased, and a battery life is affected. However, based on Manner B, the second indication information may indicate an index 3 in the table shown in FIG. 3, to be specific, indicate that scheduled cells are the SCell #1, the SCell #2, and the SCell #3. In addition, the first indication information may indicate that a SCell group that enters the dormant state is the SCell dormancy group #1, that is, first SCells are the SCell #2 and the SCell #3, so that the UE sets an active BWP of the SCell #2 to a dormant BWP, and sets an active BWP of the SCell #3 to a dormant BWP. Therefore, the UE may perform data transmission only by using the SCell #1, to reduce UE overheads. In addition, in this manner, a quantity of entries included in the scheduled cell combination table may be reduced, to reduce configuration overheads. In addition, an operating SCell in a combination may be flexibly changed by using an SCell dormancy indication, to implement flexible scheduling of the SCell.

Manner C: The UE may alternatively consider by default that no conflict occurs between the first indication information and the second indication information. If a conflict occurs, it indicates that an error exists in the first DCI, and the UE may drop the first DCI, to be specific, the UE does not perform data transmission based on the second indication information and does not switch an SCell to be in the dormant state based on the first indication information. For example, when the FDRA field indicates a scheduled cell, for a scheduled cell set, whether a corresponding cell is scheduled may be indicated based on FDRA fields corresponding to all cells included in the scheduled cell set. Therefore, the base station may avoid a conflict between the dormant first SCell and the scheduled cell. Once a conflict occurs, the UE may determine that the single DCI is invalid, or in an error scenario, the UE does not process the single DCI.

In any one of Manner A, Manner B, and Manner C, a problem that when indication information of the scheduled cell indicator field conflicts with indication information of the SCell dormancy indication field, the UE and the base station have a vague understanding of a dormant cell and the scheduled cell can be resolved. This helps ensure stability of a transmission link, reduce power consumption of the terminal, and improve a standby time capability.

In an example in which the first indication information conflicts with the second indication information, when no entry in the scheduled cell combination table includes only a PCell, a second communication apparatus may indicate, by using the second indication information, an entry that includes the PCell and at least one SCell, that is, the scheduled cell includes the PCell and at least one SCell. In this case, only the PCell may be scheduled for data transmission, and the SCell is not scheduled. Optionally, the first communication apparatus may determine, based on the first indication information, whether the one or more SCells enter the dormant state. For example, if the first indication information indicates that an SCell belonging to a same entry as the PCell enters the dormant state, the first communication apparatus may cause the SCell to enter the dormant state. In this case, an SCell indicated by the second indication information conflicts with an SCell indicated by the first indication information, and the UE may switch the conflicting SCell to be in the dormant state based on the first indication information by using Manner B. In addition, if the first indication information does not indicate that the SCell belonging to the same entry as the PCell enters the dormant state, the first communication apparatus may determine that the SCell is not scheduled and does not enter the dormant state.

For example, no entry in the scheduled cell combination table configured by the base station for the UE by using the RRC parameter includes only the PCell, that is, one entry in the scheduled cell combination table may include the PCell and one or more SCells, or one entry may include one or more SCells, and cannot include only the PCell. It may be understood that an entry that includes only a PCell is an entry whose index is 0 in the table shown in FIG. 3, an entry that includes the PCell and one or more SCells is an entry whose index is 1 or 4 in the table shown in FIG. 3, and an entry that includes one or more SCells is an entry whose index is 2 or 3 in the table shown in FIG. 3. In the first DCI received by the UE, the second indication information indicates an entry that includes the PCell and the at least one SCell, that is, the scheduled cells include the PCell and the at least one SCell. In this case, the base station may schedule, by using the first DCI, only the PCell to perform data transmission, and does not schedule the SCell. To be specific, the UE receives the PDSCH in the PCell based on indication information (for example, an FDRA field, an MCS field, or another indication field corresponding to the PCell) in the first DCI, and does not receive the PDSCH in the at least one SCell indicated by the second indication information. The UE determines, based on the first indication information, whether the SCell enters the dormant state. If a cell index of an SCell that enters the dormant state and that is indicated by the first indication information is the same as a cell index of an SCell indicated by the second indication information, the UE causes the SCell to enter the dormant state. If a cell index of an SCell that enters the non-dormant state and that is indicated by the first indication information is the same as the cell index of the SCell indicated by the second indication information, the UE determines that the SCell enters the non-dormant state, and does not receive the PDSCH in the SCell. It may be understood that in this scenario, the UE ignores scheduling information (for example, an FDRA field, an MCS field, or another indication field corresponding to the SCell) corresponding to all SCells indicated by the second indication information.

In another example, when no entry in the scheduled cell combination table includes only a PCell, the second communication apparatus may indicate, by using the second indication information, an entry that includes the PCell and at least one SCell, that is, the scheduled cell includes the PCell and the at least one SCell. In this case, the PCell may be scheduled to perform data transmission. In addition, optionally, an SCell that does not enter a dormant state may be scheduled to perform data transmission. For example, the first communication apparatus may determine, based on the first indication information, whether an SCell belonging to a same entry as the PCell enters the dormant state. If the first indication information indicates that the SCell belonging to the same entry as the PCell enters the dormant state, the first communication apparatus may cause a conflicting SCell indicated by the first indication information and the second indication information to enter the dormant state, and the SCell is not scheduled. If the first indication information does not indicate that the SCell belonging to the same entry as the PCell enters the dormant state, the first communication apparatus may determine that the SCell does not enter the dormant state, and the SCell may be scheduled to perform data transmission.

For example, no entry in the scheduled cell combination table configured by the base station for the UE by using the RRC parameter includes only the PCell, that is, one entry in the scheduled cell combination table may include the PCell and one or more SCells, or one entry may include one or more SCells, and cannot include only the PCell. In the first DCI received by the UE, the second indication information indicates an entry that includes the PCell and the at least one SCell, that is, the scheduled cells include the PCell and the at least one SCell. In this case, the base station may schedule, by using the first DCI, the PCell to perform data transmission, and schedule an SCell that has not entered the dormant state to perform data transmission. The UE determines, based on the first indication information in the first DCI, whether the SCell indicated by the second indication information enters the dormant state. If the cell index of the SCell that enters the dormant state and that is indicated by the first indication information is the same as the cell index of the SCell indicated by the second indication information, the UE causes the SCell to enter the dormant state, and does not receive the PDSCH in the SCell. If the cell index of the SCell that enters the non-dormant state and that is indicated by the first indication information is the same as the cell index of the SCell indicated by the second indication information, the UE determines that the SCell enters the non-dormant state, and the UE receives the PDSCH in the SCell based on indication information (for example, an FDRA field, an MCS field, or another indication field corresponding to the SCell) in the first DCI. It may be understood that in this scenario, the UE ignores scheduling information (for example, an FDRA field, an MCS field, or another indication field corresponding to the SCell) corresponding to the SCell that enters the dormant state and that is indicated by the first indication information.

Manner 2: The another field in the first DCI is reused for the first indication information, in other words, a bit in the another field indicates whether an SCell enters the dormant state. Manner 2 may also be referred to as a field information re-interpretation manner.

It may be understood that the first DCI in Manner 2 does not indicate a scheduled cell, that is, data cannot be scheduled.

In a possible embodiment, a prerequisite for reusing the another field in the first DCI to indicate a dormant SCell in Manner 2 is that for a scheduled cell set, some or all FDRA fields corresponding to all cells included in the scheduled cell set in the first DCI are configured as a special value. For example, any FDRA field is all 0s or all 1s.

An example in which the format of the first DCI is the DCI format 1_3 is used. For a scheduled cell set, if a resource allocation (resource allocation, RA) type (type) of a cell in the scheduled cell set is configured as an RA type 0, when a value of an FDRA field corresponding to the cell is all 0s, it indicates that the FDRA is a special value. If a resource allocation type of a cell in the scheduled cell set is configured as an RA type 1, when a value of an FDRA field corresponding to the cell is all 1s, it indicates that the FDRA is a special value. If a resource allocation type of a cell in the scheduled cell set is configured as dynamic switching (dynamicSwitch), when a value of an FDRA field corresponding to the cell is all 0s (that is, when an MBS bit of the FDRA field indicates an RA type 0) or all 1s (that is, when the MBS bit of the FDRA field indicates an RA type 1), it indicates that the FDRA field is a special value.

Based on Manner 2, for a scheduled cell set, when some or all FDRA fields in the first DCI are set to the special value, the UE may determine, based on a value of a bit in at least one information field in the first DCI, whether each SCell in the scheduled cell set is indicated as a dormant SCell. The first SCell may be one or more SCells in dormant SCells.

Optionally, the at least one information field may include at least one of a modulation and coding scheme (modulation and coding scheme, MCS) field, a new data indicator (new data indicator, NDI) field, a redundancy version (redundancy version, RV) field, a hybrid automatic repeat request (hybrid automatic repeat request, HARQ) process number (HARQ process number) field, an antenna port (antenna port) field, and a demodulation reference signal (demodulation reference signal, DMRS) sequence initialization (DMRS sequence initialization) field in the first DCI. Further, optionally, the MCS field, the NDI field, and the RV field may be included in a 1^{st} transport block (transport block, TB) of a first scheduled cell in the first DCI (which may be denoted as a TB1 of the first scheduled cell), that is, the UE may determine the first SCell based on the foregoing three fields in the TB1 of the first scheduled cell and the HARQ number process field, the antenna port field, and/or the DMRS sequence initialization field.

For example, when the base station indicates, by using an RRC parameter, a scheduled cell combination table associated with a cell set, the first scheduled cell is a cell with a smallest cell index in one or more scheduled cells indicated by the second indication information in the first DCI, that is, the second indication information indicates a cell with a smallest cell index in an entry in the table. When the base station does not indicate, by using the RRC parameter, a scheduled cell combination table associated with a cell set, the first scheduled cell is a cell with a smallest cell index in the scheduled cell set indicated by the third indication information in the first DCI. Based on different RRC parameter configurations, a minimum total quantity of bits included in all the foregoing information fields is 17 bits, and a maximum total quantity of bits included in all the foregoing information fields is 20 bits. A maximum quantity of SCells that can be configured for one cell group (cell group, CG) is 15. If a quantity of all bits included in the first indication information exceeds a quantity of cells included in the scheduled cell set or exceeds a quantity of all configured SCells, extra bits or bits that do not correspond to cells are reserved bits (reserved bits), and no information is indicated. When the base station configures the antenna port field as a type 2 (type2) by using an RRC parameter, it indicates that an antenna port field of the first SCell is an antenna port field of the first scheduled cell. The RRC parameter may be AntennaPortsDCI0-3=type2 or AntennaPortsDCI1-3=type2, or may be another RRC parameter.

In a possible example, as shown in FIG. 5, the UE may form a bitmap (bitmap) in the first DCI based on the MCS field of the TB1 of the first scheduled cell, the NDI field of the TB 1 of the first scheduled cell, the RV field of the TB1 of the first scheduled cell, the HARQ process number field, the antenna port field, and the DMRS sequence initialization field, and arrange bits in a corresponding bitmap in ascending order of cell indexes of SCells. It may be understood that the field information is used for an SCell dormancy indication, all quantities of bits of the field information from the MSB to the LSB are in one-to-one correspondence with configured SCells in ascending order of cell indexes. Therefore, the UE may determine, by interpreting a value of each bit in the bitmap, whether a corresponding SCell is indicated as a dormant SCell. For example, as shown in FIG. 5, if a value of a bit is 0, it indicates that a corresponding SCell is a dormant SCell. Correspondingly, if a value of a bit is 1, it indicates that a corresponding SCell is a non-dormant SCell. Optionally, the first DCI in Manner 2 may further carry a scheduled cell set indicator field. In this case, the scheduled cell set indication field may indicate a cell set to which the dormant SCell belongs, in other words, the scheduled cell set indicator field may indicate a cell set to which the SCell that enters the dormant state belongs. Optionally, if the first SCell does not belong to a scheduled cell set, switching all the first SCells to be in the dormant state based on the first DCI may be stopped. For example, the base station configures two cell sets: a cell set #1 and a cell set #2. The cell set #1 includes a PCell, an SCell #1, an SCell #2, and an SCell #3. The cell set #2 includes an SCell #4 and an SCell #5. If the UE receives one piece of first DCI, when a scheduled cell set indicator field in the first DCI indicates the cell set #2, and FDRA fields respectively corresponding to the SCell #4 and the SCell #5 included in the cell set #2 are both set to a special value, the UE determines, based on the MCS field of the TB1 of the first scheduled cell, the NDI field of the TB1 of the first scheduled cell, the RV field of the TB1 of the first scheduled cell, the HARQ number process field, the antenna port field, and/or the DMRS sequence initialization field, that the SCell #4 and the SCell #5 enter the dormant state or the non-dormant state. The SCell #4 corresponds to an MSB in all bits in the foregoing five fields, that is, a first bit, and the SCell #5 corresponds to a next bit of the MSB, that is, a second bit. If the first bit is 0, and the second bit is 1, it indicates that the SCell #4 enters the dormant state, and the SCell #5 enters the non-dormant state.

For example, if the first indication information includes the MCS field of the TB1 of the first scheduled cell, the NDI field of the TB1 of the first scheduled cell, the RV field of the TB1 of the first scheduled cell, the HARQ number process field, the antenna port field, and the DMRS sequence initialization field, a quantity of bits of the first indication information is 17, which is greater than a quantity of cells included in the cell set #2, that is, 2. Two MSB bits in the first indication information are valid indication fields, and remaining 15 bits are reserved bits, and no information is indicated. It may also be understood that, in this case, the first indicator information includes only two MSB bits of the MCS field of the TB1 of the first scheduled cell.

In another example, the scheduled cell set indicator field in the first DCI does not restrict a cell set to which the SCell entering the dormant state belongs. In other words, the MCS field of the TB1 of the first scheduled cell, the NDI field of the TB1 of the first scheduled cell, the RV field of the TB1 of the first scheduled cell, the HARQ number process field, the antenna port field, and/or the DMRS sequence initialization field may indicate whether all configured SCells or all configured activated SCells enter the dormant state or the non-dormant state.

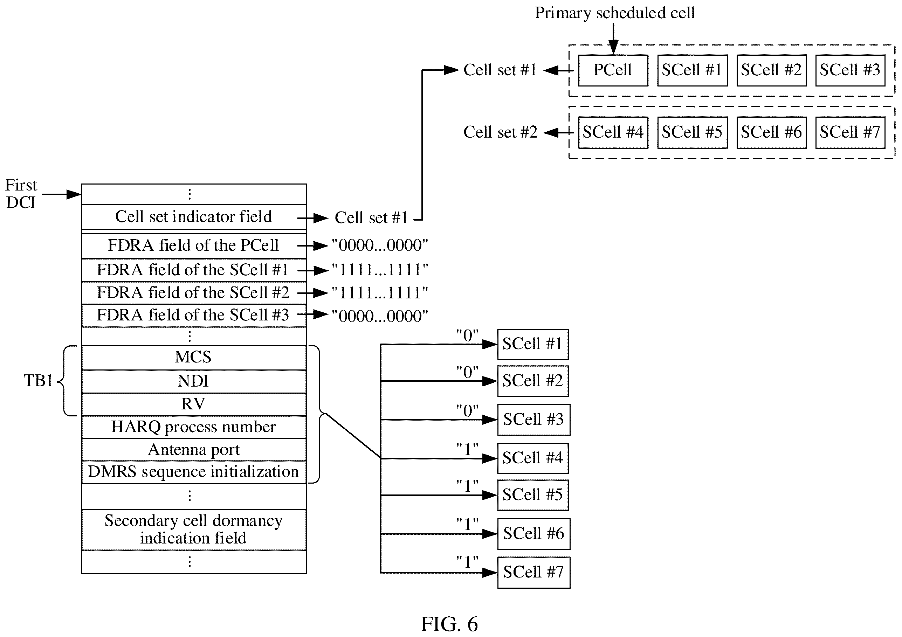

In a possible implementation, FDRA fields corresponding to all cells included in the scheduled cell set in the first DCI are all set to a special value. As shown in FIG. 6, the base station configures two cell sets: a cell set #1 and a cell set #2. The cell set #1 includes a PCell, an SCell #1, an SCell #2, and an SCell #3. The cell set #2 includes an SCell #4, an SCell #5, an SCell #6, and an SCell #7. If the UE receives a piece of first DCI, when a scheduled cell set indicator field in the first DCI indicates the cell set #1, and FDRA fields respectively corresponding to the PCell, the SCell #1, the SCell #2, and the SCell #3 included in the cell set #1 are all set to a special value, where an RA type 0 is configured for the PCell and the SCell #3 whose FDRA fields are respectively set to all 0s, and an RA type 1 is configured for the SCell #1 and the SCell #2 whose FDRA fields are respectively set to all 1s, the UE determines, based on the MCS field of the TB 1 of the first scheduled cell, the NDI field of the TB1 of the first scheduled cell, the RV field of the TB1 of the first scheduled cell, the HARQ number process field, the antenna port field, and/or the DMRS sequence initialization field, that the PCell, the SCell #1, the SCell #2, the SCell #3, the SCell #4, the SCell #5, the SCell #6, and the SCell #7 enter the dormant state or the non-dormant state. That is, information about the foregoing five DCI fields may indicate whether all configured SCells enter the dormant state or the non-dormant state. It is assumed that all the configured SCells are in an activated state. The SCell #1 corresponds to an MSB in all bits in the foregoing five fields, that is, a first bit, the SCell #2 corresponds to a next bit of the MSB, that is, a second bit, and so on. The SCell #3, the SCell #4, the SCell #5, the SCell #6, and the SCell #7 respectively correspond to a third bit, a fourth bit, a fifth bit, a sixth bit, and a seventh bit. If the first bit, the second bit, and the third bit are 0, and the fourth bit, the fifth bit, the sixth bit, and the seventh bit are 1, it indicates that the SCell #1, the SCell #2, and the SCell #3 enter the dormant state, and the SCell #4, the SCell #5, the SCell #6, and the SCell #7 enter the non-dormant state.

For example, the first indication information is the MCS field of the TB1 of the first scheduled cell, the NDI field of the TB1 of the first scheduled cell, the RV field of the TB1 of the first scheduled cell, the HARQ number process field, the antenna port field, and/or the DMRS sequence initialization field. It is assumed that a quantity of bits of the first indication information is 17, which is greater than a quantity of all configured SCells, that is, 7. Seven bits of the first indication information from the MSB to the LSB are valid indication fields, remaining 10 bits are reserved bits, and no information is indicated. It may also be understood that, in this case, the first indication information includes only the MCS field (for example, five bits) of the TB1 of the first scheduled cell, the NDI field (for example, one bit) of the TB1 of the first scheduled cell, and one MSB bit of the RV field of the TB1 of the first scheduled cell. In other words, in this case, the first indication information may include seven bits.

In another possible implementation, if a cell set indicated by the scheduled cell set indicator field in the first DCI includes a PCell, an FDRA field corresponding to an SCell in the scheduled cell set other than the PCell is set to a special value, and an FDRA field corresponding to the PCell is set to a normal value, in other words, a frequency domain resource block location for data transmission on the PCell is indicated. If a cell set indicated by the scheduled cell set indicator field in the first DCI does not include a PCell, that is, all cells included in the indicated scheduled cell set are SCells, FDRA fields corresponding to all the SCells in the scheduled cell set are all set to a special value.

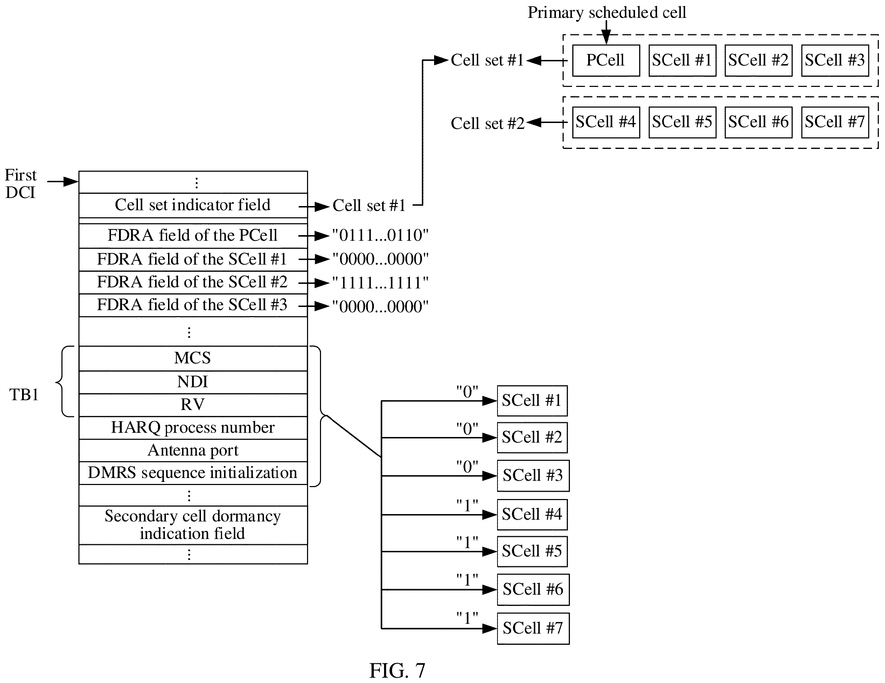

As shown in FIG. 7, when the scheduled cell set indicator field in the first DCI indicates the cell set #1, and FDRA fields respectively corresponding to the SCell #1, the SCell #2, and the SCell #3 included in the cell set #1 are all set to a special value, where an RA type 0 is configured for the SCell #1 and the SCell #3 whose FDRA fields are respectively set to all 0s, an RA type 1 is configured for the SCell #2 whose FDRA field is set to all 1s, and an FDRA field corresponding to the PCell is a normal data scheduling indication, that is, is not all 0s or all 1s, the UE determines, based on the MCS field of the TB1 of the first scheduled cell, the NDI field of the TB1 of the first scheduled cell, the RV field of the TB1 of the first scheduled cell, the HARQ number process field, the antenna port field, and/or the DMRS sequence initialization field, that the PCell, the SCell #1, the SCell #2, the SCell #3, the SCell #4, the SCell #5, the SCell #6, and the SCell #7 enter the dormant state or the non-dormant state.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

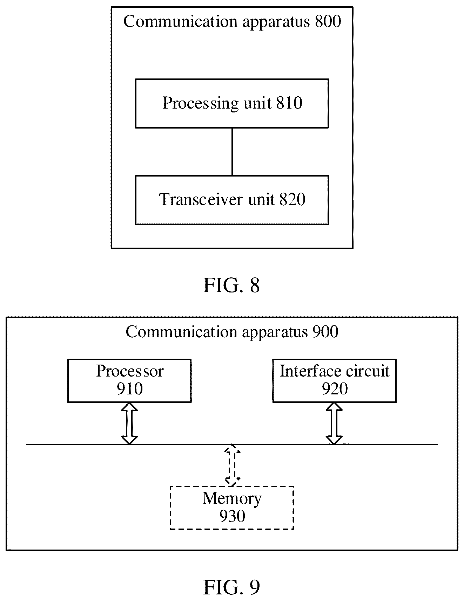

FIG. 8 and FIG. 9 are diagrams of structures of possible communication apparatuses according to embodiments of this application. These communication apparatuses may be configured to implement the function of the terminal or the base station in the foregoing method embodiments, and therefore can also achieve beneficial effects of the foregoing method embodiments. In this embodiment of this application, the communication apparatus may be one of the terminals 120a to 120j shown in FIG. 1, or may be the base station 110a or 110b shown in FIG. 1, or may be a module (such as a chip) used in the terminal or the base station.

As shown in FIG. 8, the communication apparatus 800 includes a processing unit 810 and a transceiver unit 820. The communication apparatus 800 is configured to implement the function of the UE or the base station in the method embodiment shown in FIG. 2.

When the communication apparatus 800 is configured to implement the function of the UE in the method embodiment shown in FIG. 2, the transceiver unit 820 may be configured to receive first DCI; and the processing unit 810 is configured to set an active BWP of a first SCell to a first dormant BWP based on first indication information.

When the communication apparatus 800 is configured to implement the function of the base station in the method embodiment shown in FIG. 2, the processing unit 810 may be configured to determine first DCI, and the transceiver unit 820 may be configured to send the first DCI. The processing unit 810 may be further configured to set an active BWP of a first SCell to a first dormant BWP.

For more detailed descriptions of the processing unit 810 and the transceiver unit 820, refer to related descriptions in the method embodiment shown in FIG. 2.

As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, store input data for the processor 910 to run instructions, or store data generated after the processor 910 runs instructions.

When the communication apparatus 900 is configured to implement the method shown in FIG. 2, the processor 910 is configured to implement the function of the processing unit 810, and the interface circuit 920 is configured to implement the function of the transceiver unit 820.

When the foregoing communication apparatus is a chip used in the UE, the chip in the UE implements the function of the UE in the foregoing method embodiment. The chip in the UE receives, by using another module (such as a radio frequency module or an antenna) in the UE, information sent by the base station to the UE; or the chip in the UE sends information to another module (such as a radio frequency module or an antenna) in the UE, where the information is sent by the UE to the base station.

When the communication apparatus is a module used in the base station, the module in the base station implements the function of the base station in the foregoing method embodiment. The module in the base station receives information from another module (for example, a radio frequency module or an antenna) in the base station, where the information is sent by the UE to the base station; or the module in the base station sends information to another module (for example, a radio frequency module or an antenna) in the base station, where the information is sent by the base station to the UE. The module in the base station herein may be a baseband chip of the base station, a CU, a DU, or another module, or may be an apparatus in an open radio access network (open radio access network, O-RAN) architecture, for example, an apparatus like an open CU or an open DU.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that can be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or UE. Certainly, the processor and the storage medium may exist in the base station or the UE as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions of different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving first downlink control information DCI, wherein a format of the first DCI is a DCI format that supports scheduling of data of a plurality of cells, the first DCI comprises first indication information, and the first indication information indicates that an active BWP of a first secondary cell is a first dormant BWP; and
setting the active BWP of the first secondary cell to the first dormant BWP based on the first indication information.

2. The method according to claim 1, wherein the first indication information occupies a bit in at least one of the following information field that is in the first DCI and that is used for scheduling a 1^{st} transport block of a first cell: a modulation and coding scheme MCS field, a new data indicator NDI field, a redundancy version RV field, a hybrid automatic repeat request HARQ process number field, and an antenna port field.

3. The method according to claim 2, wherein a radio resource control RRC parameter is for configuring the antenna port field as a type 2.

4. The method according to claim 2 or 3, wherein a value of a frequency domain resource assignment FDRA field that is in the first DCI and that is used for scheduling the first cell is a special value.

5. The method according to claim 4, wherein the first cell is a cell with a smallest cell index in one or more scheduled cells indicated by second indication information in the first DCI; or the first cell is a cell with a smallest cell index in a first cell set indicated by third indication information in the first DCI.

6. The method according to claim 4 or 5, wherein
when a resource allocation type of the first cell is configured as a resource allocation type 0, and when the value of the FDRA field used for scheduling the first cell is all 0s, it indicates that the value of the FDRA field is the special value; or
when the resource allocation type of the first cell is configured as a resource allocation type 1, and when the value of the FDRA field used for scheduling the first cell is all 1s, it indicates that the value of the FDRA field is the special value.

7. A communication method, comprising:
determining first downlink control information DCI, wherein a format of the first DCI is a DCI format that supports scheduling of data of a plurality of cells, the first DCI comprises first indication information, and the first indication information indicates that an active BWP of a first secondary cell is a first dormant BWP;
sending the first DCI; and
setting the active BWP of the first secondary cell to the first dormant BWP.

8. The method according to claim 7, wherein the first indication information occupies a bit in at least one of the following information field that is in the first DCI and that is used for scheduling a 1^{st} transport block of a first cell: a modulation and coding scheme MCS field, a new data indicator NDI field, a redundancy version RV field, a hybrid automatic repeat request HARQ process number field, and an antenna port field.

9. The method according to claim 8, wherein a radio resource control RRC parameter is for configuring the antenna port field as a type 2.

10. The method according to claim 8 or 9, wherein a value of a frequency domain resource assignment FDRA field that is in the first DCI and that is used for scheduling the first cell is a special value.

11. The method according to claim 10, wherein the first cell is a cell with a smallest cell index in one or more scheduled cells indicated by second indication information in the first DCI; or the first cell is a cell with a smallest cell index in a first cell set indicated by third indication information in the first DCI.

12. The method according to claim 10 or 11, wherein
when a resource allocation type of the first cell is configured as a resource allocation type 0, and when the value of the FDRA field used for scheduling the first cell is all 0s, it indicates that the value of the FDRA field is the special value; or
when the resource allocation type of the first cell is configured as a resource allocation type 1, and when the value of the FDRA field used for scheduling the first cell is all 1s, it indicates that the value of the FDRA field is the special value.

13. A communication apparatus, comprising a processor, wherein the processor is configured to execute a computer program or instructions, to implement the method according to any one of claims 1 to 12.

14. A communication apparatus, comprising a module configured to perform the method according to any one of claims 1 to 12.

15. A computer-readable storage medium, wherein the storage medium stores a computer program or instructions, and when the computer program or the instructions are executed by a communication apparatus, the method according to any one of claims 1 to 12 is implemented.

16. A computer program product, comprising a computer program or instructions, wherein when the computer program or the instructions are executed by a computer, the computer is caused to implement the method according to any one of claims 1 to 12.

17. A communication system, comprising:
a first communication apparatus, configured to implement the method according to any one of claims 1 to 6; and
a second communication apparatus, configured to implement the method according to any one of claims 7 to 12.

18. A chip, comprising a logic circuit, configured to implement the method according to any one of claims 1 to 12.
